# EUROPEAN PATENT APPLICATION

(11) **EP 3 893 155 A1**
(43) Date of publication of application: **13.10.2021**
(21) Application number: 21163382.1
(22) Date of filing: 18.03.2021
(51) Int. Cl.: G06K 9/62, G06K 9/00

(54) **METHOD FOR ERGONOMIC SCORING FROM WEBCAM**

(30) Priority: 08.04.2020 US 202016843463
(71) Applicant: The Boeing Company, Chicago, IL 60606-1596 (US)
(72) Inventor: SZARSKI, Martin Alexander, Chicago, IL 60606-1596 (US); STEELE, Peter Nathan, Chicago, IL 60606-1596 (US); AUSTIN, Johanna Louise, Chicago, IL 60606-1596 (US)
(74) Representative: Morrall, Jonathan Ian McLachlan

(57) **Abstract**

A method of analyzing ergonomics includes calculating a three-dimensional skeletal model. The method further includes scoring the three-dimensional skeletal model. The method further includes storing the score with the skeletal identifier.

## Description

### TECHNOLOGICAL FIELD

The present disclosure relates generally to the field of ergonomics. More specifically the present disclosure relates to the field of determining ergonomic risk factors by analyzing video data.

### BACKGROUND

Musculoskeletal disorders affect the muscles, nerves, blood vessels, ligaments and tendons. Workers in many different industries and occupations can be exposed to risk factors at work, such as lifting heavy items, bending, reaching overhead, pushing and pulling heavy loads, working in awkward body postures and performing the same or similar tasks repetitively. Exposure to these known risk factors for musculoskeletal disorders increases a worker's risk of injury.

Ergonomics, by fitting a job to a person, helps lessen muscle fatigue, increases productivity and reduces the number and severity of work-related musculoskeletal disorders. To collect data for studying ergonomics of a human within an environment, such as a workplace, an instructor may study positioning of the human user in the environment and provide feedback to the human user. However, instructors may not always be available to assess ergonomics in a given environment and/or such instructors may be cost prohibitive for the human user or his/her employer. Therefore, alternative systems and methods for ergonomics data collection, assessment, and coaching are desired.

### SUMMARY

According to one aspect of the present application, a method of analyzing ergonomics is disclosed, with the method including calculating a three-dimensional skeletal model. The method further includes scoring the three-dimensional skeletal model. The method further includes storing the score with the skeletal identifier.

According to further aspects, disclosed methods further include extracting a first two-dimensional skeletal structure from a first image; computing a skeletal descriptor from the first skeletal structure; and comparing the computed skeletal descriptor to a set of stored skeletal descriptors for assigning a skeletal identifier with the computed skeletal descriptor.

According to further aspects, disclosed methods further include wherein the computed skeletal descriptor is at least one of a vector and/or a code.

According to further aspects, disclosed methods further include wherein the extracting the two-dimensional structure is based off of at least one of facial recognition, color recognition, and/or ratios of distance between points in the two-dimensional skeletal structure.

According to further aspects, disclosed methods further include wherein comparing the computed skeletal descriptors includes comparing a vector element in the computed skeletal descriptor to a vector element in the stored skeletal descriptor set, taking the mean value of the squared difference, comparing the mean value to a threshold, and assigning the computed skeletal descriptor to the skeletal identifier when the mean value is less than the threshold.

According to further aspects, disclosed methods further include adding the computed skeletal descriptor to the stored skeletal descriptor set when the mean value is less than the threshold.

According to further aspects, disclosed methods further include generating a new skeletal identifier an assigning the computed skeletal descriptor to the new skeletal identifier when the mean value is greater than the threshold.

According to further aspects, disclosed methods further include determining an action based off the data stored with the skeletal identifier.

According to further aspects, disclosed methods further include estimating a risk factor based at least in part of the determined action.

According to further aspects, disclosed methods further include extracting more than one two-dimensional skeletal structure from the first image.

According to further aspects, disclosed methods further include analyzing an object associated with the skeletal structure, wherein the analyzing the object includes extracting the object from the first image, computing an object descriptor, and comparing the computed object descriptor to a set of stored object properties.

According to further aspects, disclosed methods further include wherein scoring the three-dimensional skeletal model further includes calculating the effect of the object on the three-dimensional skeletal model.

According to further aspects, disclosed methods further include wherein the scoring includes performing a pose estimation of the skeletal model.

According to further aspects, disclosed methods further include wherein the scoring includes using a lookup database for known skeletal poses.

According to further aspects, disclosed methods further include wherein the first image is a composite from a virtual reality image and a real-life image of an actor experiencing the virtual reality.

According to further aspects, disclosed methods further include wherein the actor interacts with an object, and the object is a virtual object.

According to further aspects, disclosed methods further include calculating a second three-dimensional skeletal model. The methods further include scoring the second three-dimensional skeletal model. The methods further include storing the second score with the skeletal identifier.

In another aspect, the present application discloses an apparatus for analyzing ergonomics, the apparatus further including a memory and a processing circuitry coupled to the memory. The processing circuitry is operable to calculate a three-dimensional skeletal model. The processing circuitry is further operable to score the three-dimensional skeletal model. The processing circuitry is further operable to store the score with the skeletal identifier.

According to further aspects, the processing circuitry is further operable to extract a two-dimensional skeletal structure from a first image. The processing circuitry is further operable to compute a skeletal descriptor from the skeletal structure. The processing circuitry is further operable to compare the computed skeletal descriptor to a set of stored skeletal descriptors for assigning a skeletal identifier with the computed skeletal descriptor.

In another aspect, the present application discloses a computer-readable storage medium, which may be non-transitory and having computer-readable program code that causes an apparatus to calculate a three-dimensional skeletal model, score the three-dimensional skeletal model, and store the score with the skeletal identifier.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a system for ergonomic scoring from an image.
FIG. 2 is an illustration of a system for ergonomic scoring including an object.
FIG. 3 is an illustration of two images from different cameras to provide the same ergonomic score.
FIG. 4 is an illustration of two skeletal structures with scoring.
FIG. 5 is an illustration of multiple skeletal structure sets associated with skeletal identifiers.
FIG. 6 is a graphical interface showing the ergonomic scoring of a left shoulder abduction in degrees over time of a skeletal structure.
FIG. 7 is an illustration of a virtual reality image with ergonomic scoring on actors in the virtual reality.
FIG. 8 is a flow chart of a method for ergonomic scoring from an image.
FIG. 9 illustrates an apparatus according to some example implementations of the present disclosure.

### DETAILED DESCRIPTION

There is a need to monitor and score individuals engaging in physical labor to prevent musculoskeletal energy. Having real-time feedback on movements can be used in multiple ways. A warning signal, such as a sound, a light, haptic feedback, etc., can provide an individual important corrective information so that the number and severity of injuries can be reduced.

Similarly, data collected over time can provide insights as to whether a particular task should be redesigned. For example, a majority of different workers may exceed acceptable ergonomic parameters to perform a task. If captured and determined to be a systemic issue rather than an individual issue, the task can be reformulated in order to ensure efficiency and safety for the workers. A system that does not require a person to be present, but monitors the worker either continuously or discretely at times unknown to the worker can more accurately capture the worker's day-to-day actions in order to improve efficiency and safety.

Likewise, an ergonomic scoring system can be used in the initial design stages. Using a system that employs one or two cameras, an individual working on a system in virtual reality can perform motions that can mimic what an operator with a real-life device may perform. Such an insight can allow designs that improve safety and efficiency before costs are incurred building a non-optimal system.

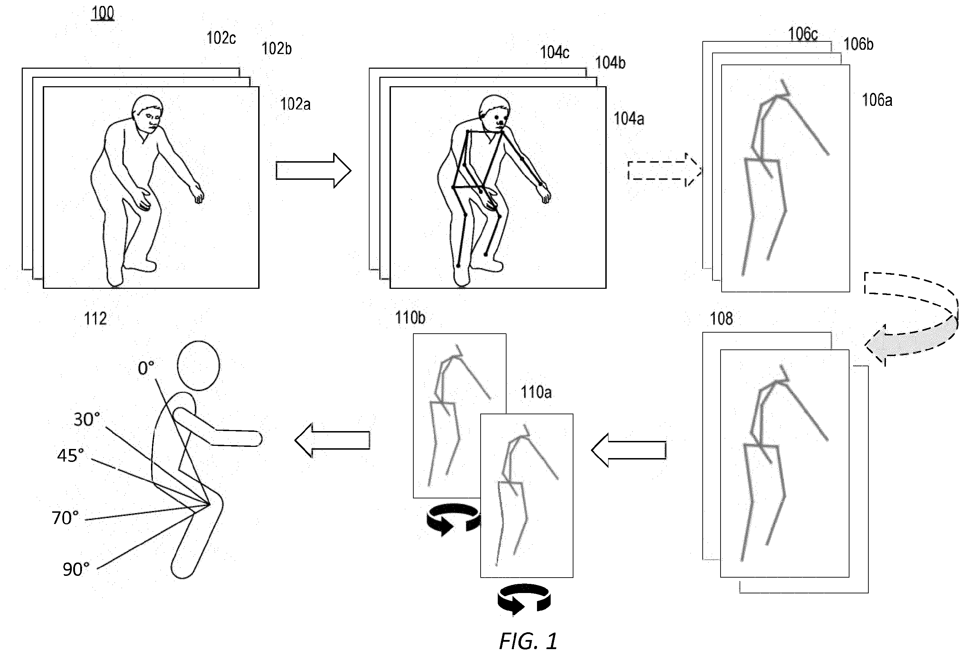

FIG. 1 is an illustration of a system 100 for ergonomic scoring from an image 102a. The system 100 can generate a three-dimensional skeletal model 110a from the image 102a. The system 100 can score the three-dimensional skeletal model 110a and then store the score 112 with a skeletal identifier to ensure any further scores can be attributed to, for example, a particular person or activity.

In some embodiments, the system 100 can generate the three-dimensional skeletal model 110a from the image 102a by extracting a two-dimensional skeletal structure 104a from the image 102a. The system 100 can compute a skeletal descriptor 106a from the skeletal structure 104a. The skeletal descriptor 106a can be compared to a set of stored skeletal descriptors 108 for assigning the skeletal identifier with the skeletal descriptor.

In some embodiments, extracting the two-dimensional structure 104a is based off at least one of facial recognition, color recognition, and/or ratios of distance between points in the two-dimensional skeletal structure. In some embodiments, the computed skeletal descriptor 106a can be a vector and/or a code.

In some embodiments, comparing the skeletal descriptor 106a can include comparing a vector element in the computed skeletal descriptor to a vector element in the stored skeletal descriptor set 108, taking the mean value of the squared difference, comparing the mean value to a threshold, and assigning the computed skeletal descriptor 106a to the skeletal identifier when the mean value is less than the threshold. In some embodiments, comparing the skeletal descriptor 106a can also include adding the computed skeletal descriptor 106a to the stored skeletal descriptor set 108 when the mean value is less than the threshold. In some embodiments, comparing the skeletal descriptor 106a can also include generating a new skeletal identifier and assigning the skeletal descriptor 106a to the new skeletal identifier when the mean value is greater than the threshold.

In some embodiments, the scoring can include performing a pose estimation of the three-dimensional skeletal model 110a. In some embodiments, the scoring can include using a lookup database for known skeletal poses.

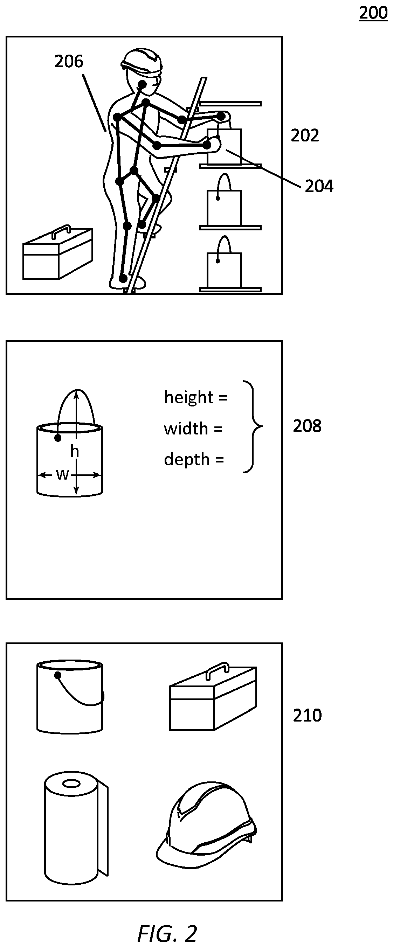

FIG. 2 is an illustration of a system 200 for ergonomic scoring including an object 204. The system 200 can analyze the object 204 associated with a skeletal structure 206. The analysis can include extracting the object 204 from a first image 202. The system 200 can compute an object descriptor 208. The system 200 can compare the computed object descriptor 208 to a set 210 of stored object properties.

In some embodiments, scoring a three-dimensional skeletal model can further include calculating the effect of the object 204 on the three-dimensional skeletal model.

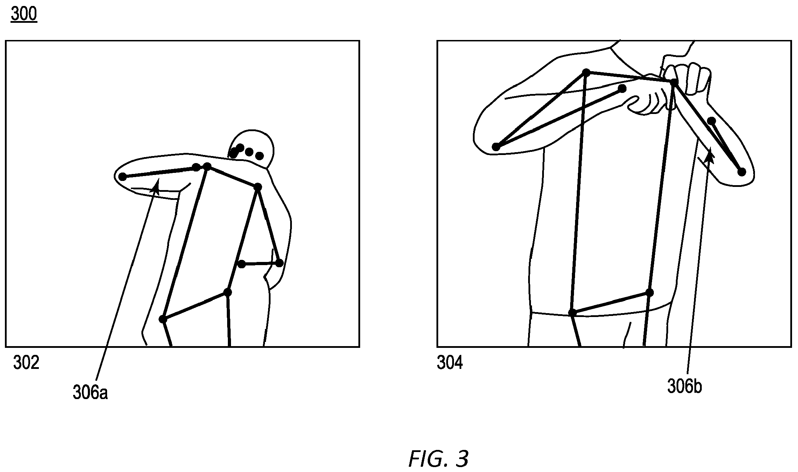

FIG. 3 is an illustration of two images 302, 304 from different cameras to provide the same ergonomic score. Here, the same individual is performing the same task with two cameras at two different positions capturing a first image 302 and a second image 304. As shown, the images 302, 304 have each been analyzed in order to extract a first two-dimensional skeletal structure 306a from the first image 302 and a second two-dimensional skeletal structure 306b from the second image 304.

Such redundancies can be useful in various situations such as if a camera is blocked from capturing a person by a second object or if a camera is malfunctioning. Different angles also allow for fewer errors when calculating a three-dimensional model. For example, if a person's wrist is in front of their torso and one camera is at the person's back, the second camera may still capture data related to the wrist if it is positioned at a different location in the room. Likewise, an average score from separate cameras is more likely to determine if an ergonomic score is accurate, or if there is a need to recalibrate the two-dimensional skeletal structure extractions.

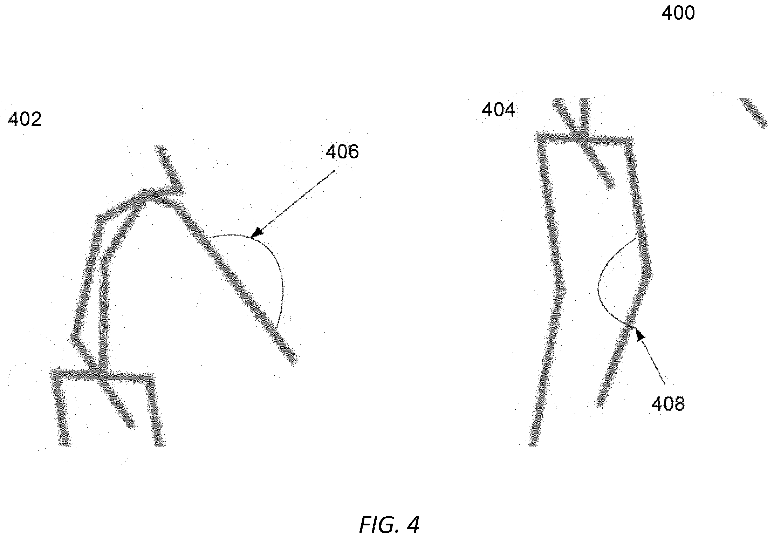

FIG. 4 is an illustration of two skeletal structures 402, 404 with scoring. Skeletal structure 402 has a score 406 of an elbow joint. Skeletal structure 404 has a score 408 of a knee joint.

As shown, the skeletal structures 402, 404 can be from the same individual. This can provide a holistic ergonomic score in the system. For example, the scores of skeletal structures 402, 404 can be merged to provide an overall score for the individual, such as performing a pose estimation. In some embodiments, the scores can be determined using a lookup database. In some embodiments, an image can have more than one individual.

To achieve a holistic score, some embodiments can calculate a second three-dimensional skeletal model from a second image. The second three-dimensional skeletal model can be scored. The second score can be stored with the skeletal identifier.

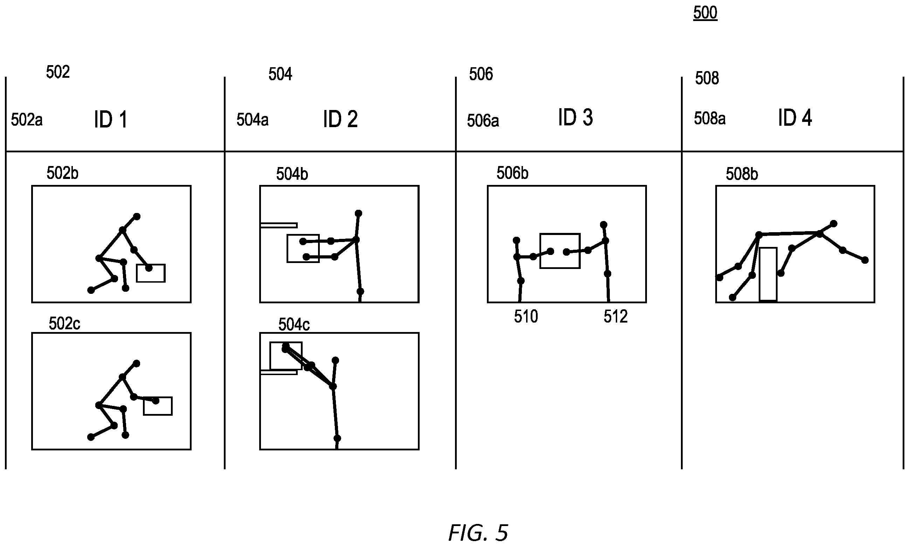

FIG. 5 is an illustration of multiple skeletal structure sets 502-508 associated with skeletal identifiers 502a-508a. Set 502 has image 502b and image 502c, both associated with ID A 502a. Both image 502b and image 502c show an individual moving an object. Using the methods described herein, the skeletal identifier ID A 502a is associated with two-dimensional skeletal structures from images 502b, c, as the likelihood is considered high enough that the two-dimensional skeletal structures both belong to the same person.

As shown in image 506b, more than one person can be assigned to a skeletal ID, skeletal ID C 506a. Skeletal structure 510 and skeletal structure 512 are separate entities, but performing the same task. This grouping can provide data to determine if two individuals perform a task improperly even if the same two individuals each perform a task correctly when paired with other individuals. Such data can allow for more nuanced feedback so that individual averaged ergonomic scores for an activity do not mask lingering ergonomic issues.

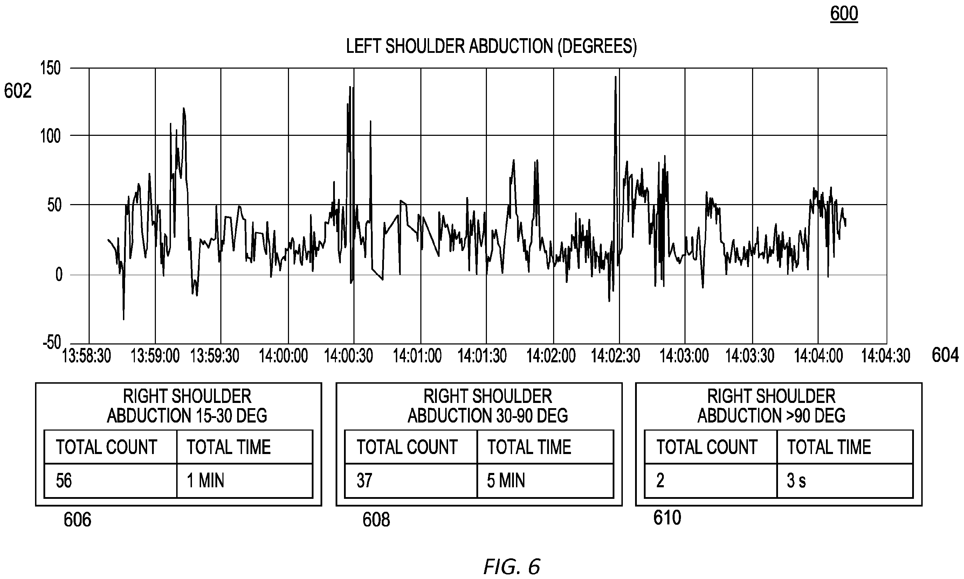

FIG. 6 is a graphical interface 600 showing the ergonomic scoring of a left shoulder abduction in degrees 602 over time 604 of a skeletal structure. Right shoulder abduction information is provided in boxes, split into box 606 for 15-30 degree abduction, box 608 for 30-90 degree abduction, and box 610 for greater than 90 degree abduction.

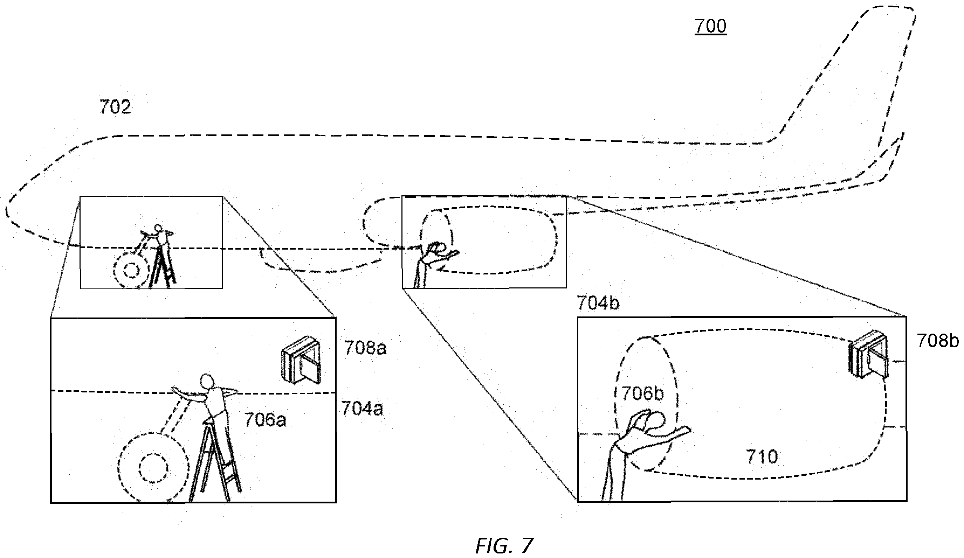

FIG. 7 is an illustration 700 of a virtual reality image 702 with ergonomic scoring on actors 706a-b in the virtual reality. The actors 706a-b are captured in real images 704a-b respectively, shown in FIG. 7 with the virtual reality image 702 overlaid in the real images 704a-b. Each real image 704a-b is shown with a respective mobile camera 708a-b. Actor 706b interacts with object 710, shown as a jet engine.

As described above, the purpose of actors working with a virtual reality in the context of ergonomic scoring allows engineers to determine if their designs create ergonomic hazards or other inefficiencies or dangers to future workers.

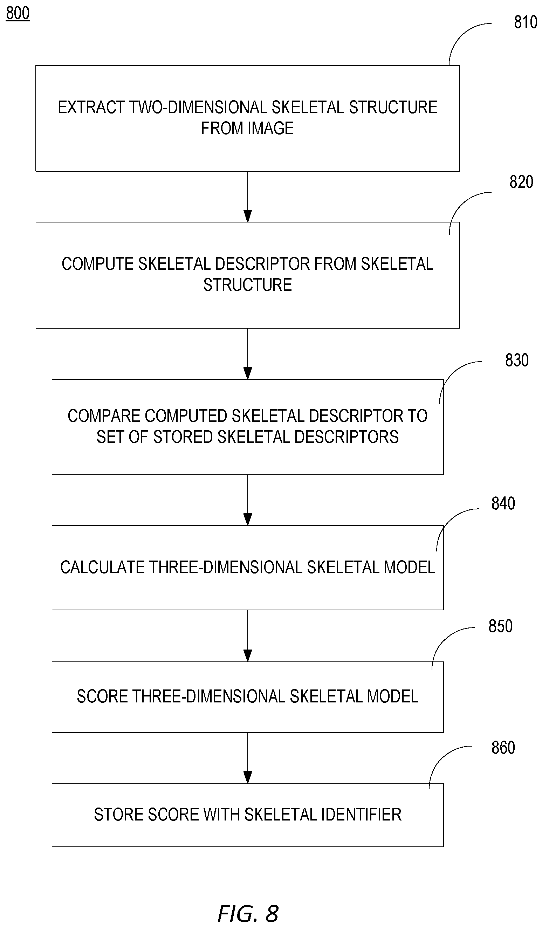

FIG. 8 is a flow chart of a method 800 for ergonomic scoring from an image. In FIG. 8, the method 800 comprises calculating 810 a three-dimensional skeletal model.

The method 800 further includes scoring 820 the three-dimensional skeletal model. In some embodiments, the scoring includes performing a pose estimation of the skeletal model. Some embodiments include using a lookup database for known skeletal poses to perform the scoring.

The method 800 further includes storing 830 the score with the skeletal identifier. Storing a particular score with an identifier can allow for review over time to determine if a particular individual needs coaching in a particular task, e.g., to avoid musculoskeletal injuries, or if there was an anomaly in how the task was captured.

In some embodiments, calculating 810 a three-dimensional skeletal model further comprises extracting 840 a two-dimensional skeletal structure from a first image. For example, the extraction can be based off of at least one of facial recognition, color recognition, and/or ratios of distance between points in the two-dimensional skeletal structure. In some embodiments, the first image can be from a streaming camera to evaluate real-time working conditions. In some embodiments, ergonomic analysis is being performed using real-time images in successive frames of an output of the streaming camera. In some embodiments, more than one two-dimensional skeletal structure can be extracted from the first image.

In some embodiments, calculating 810 a three-dimensional skeletal model further comprises computing 850 a skeletal descriptor from the two-dimensional skeletal structure. In some embodiments, the skeletal descriptor can be a vector and/or a code.

In some embodiments, calculating 810 a three-dimensional skeletal model further comprises comparing 860 the computed skeletal descriptor to a set of stored skeletal descriptors for assigning a skeletal identifier with the computed skeletal descriptor. In some embodiments, the comparison includes comparing a vector element in the computed skeletal descriptor to a vector element in the stored skeletal descriptor set. The comparison can then take the mean value of the squared difference. The mean value can be compared to a threshold. When the mean value is less than the threshold, the computed skeletal descriptor can then be assigned to the skeletal identifier. In some embodiments, the computed skeletal descriptor can be added to the stored skeletal descriptor set when the mean value is less than the threshold. In some embodiments, a new skeletal identifier can be generated and the computed skeletal descriptor can be assigned to the new skeletal identifier when the mean value is greater than the threshold.

In some embodiments, the method 800 further includes analyzing an object associated with the skeletal structure. Analyzing the object can include extracting the object from the first image; computing an object descriptor; and comparing the computed object descriptor to a set of stored object properties. For example, wherein scoring the three-dimensional skeletal model further comprises calculating the effect of the object on the three-dimensional skeletal model.

In some embodiments, an action can be determined based off the data stored with the skeletal identifier. A risk factor can be estimated based at least in part on the determined action.

In some embodiments, the first image can be a composite image from a virtual reality image and a real-life image of an actor experiencing the virtual reality. In some embodiments, the actor interacts with an object that is a virtual object.

In some embodiments, the method 800 can further include extracting a second two-dimensional skeletal structure from a second image; computing a second skeletal descriptor from the second two-dimensional skeletal structure; comparing the second computed skeletal descriptor to the set of stored skeletal descriptors for assigning the skeletal identifier with the second computed skeletal descriptor; calculating a second three-dimensional skeletal model; scoring the second three-dimensional skeletal model; and storing the second score with the skeletal identifier.

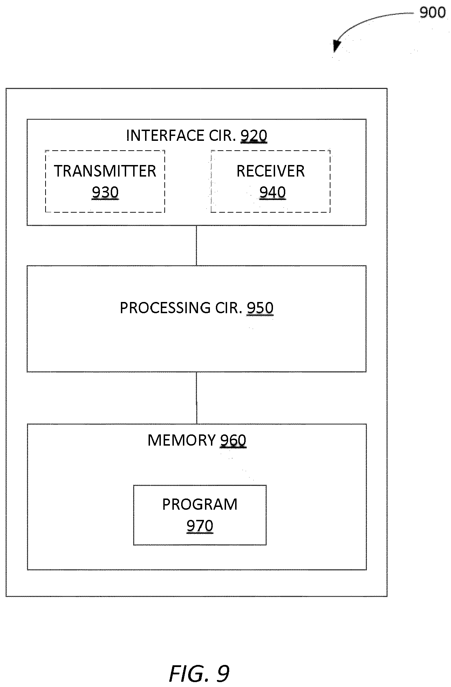

FIG. 9 illustrates an apparatus 900 according to some example implementations of the present disclosure. The apparatuses and systems presented in at least one of FIGS. 2-5 can comprise at least a portion of apparatus 900. Further, method 800 can be performed by at least a portion of apparatus 900. Generally, an apparatus of exemplary implementations of the present disclosure may comprise, include or be embodied in one or more fixed or portable electronic devices. Examples of suitable electronic devices include a smartphone, tablet computer, laptop computer, desktop computer, workstation computer, server computer or the like. The apparatus may include one or more of each of a number of components such as, for example, processing circuitry 950 (e.g., processor unit) connected to a memory 960 (e.g., storage device).

The processing circuitry 950 may be composed of one or more processors alone or in combination with one or more memories. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory 960 (of the same or another apparatus).

The processing circuitry 950 may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory 960 is generally any piece of computer hardware that is capable of storing information such as, for example, data, computer programs (e.g., computer-readable program code 970) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory 960, the processing circuitry 950 may also be connected to one or more interfaces for displaying, transmitting and/or receiving information. The interfaces may include a communications interface 920. The communications interface 920 may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like. The communications interface may have one or more transmitters 930. The communications interface may have one or more receivers 940.

As indicated above, program code instructions may be stored in memory, and executed by processing circuitry that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, an apparatus 900 may include a processing circuitry 950 and a computer-readable storage medium or memory 960 coupled to the processing circuitry, where the processing circuitry is configured to execute computer-readable program code 970 stored in the memory. It will also be understood that one or more functions, and combinations of functions, may be implemented by special purpose hardware-based computer systems and/or processing circuitry s which perform the specified functions, or combinations of special purpose hardware and program code instructions.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

Further, the disclosure comprises examples according to the following clauses:
Clause 1. A method of analyzing ergonomics, the method comprising: calculating a three-dimensional skeletal model from a first image; scoring the three-dimensional skeletal model; and storing the score with a skeletal identifier.
Clause 2. The method of clause 1, wherein the calculating a three-dimensional skeletal model further comprises: extracting a first two-dimensional skeletal structure from the first image; computing a skeletal descriptor from the first skeletal structure; and comparing the computed skeletal descriptor to a set of stored skeletal descriptors for assigning the skeletal identifier with the computed skeletal descriptor.
Clause 3. The method of clause 2, wherein the computed skeletal descriptor is at least one of a vector and/or a code.
Clause 4. The method of clause 2 or 3, wherein the extracting the two-dimensional structure is based off of at least one of facial recognition, color recognition, and/or ratios of distance between points in the two-dimensional skeletal structure.
Clause 5. The method of any of clauses 2 to 4, wherein comparing the computed skeletal descriptor comprises: comparing a vector element in the computed skeletal descriptor to a vector element in the stored skeletal descriptor set; taking a mean value of a squared difference; comparing the mean value to a threshold; and assigning the computed skeletal descriptor to the skeletal identifier when the mean value is less than the threshold.
Clause 6. The method of clause 5, further comprising: adding the computed skeletal descriptor to the stored skeletal descriptor set when the mean value is less than the threshold.
Clause 7. The method of clause 5, further comprising generating a new skeletal identifier and assigning the computed skeletal descriptor to the new skeletal identifier when the mean value is greater than the threshold.
Clause 8. The method of any of clauses 2 to 7, further comprising determining an action based off the data stored with the skeletal identifier.
Clause 9. The method of claim 8, further comprising estimating a risk factor based at least in part on the determined action.
Clause 10. The method of any of clauses 2 to 9, further comprising extracting more than one two-dimensional skeletal structure from the first image.
Clause 11. The method of any preceding clause, further comprising analyzing an object associated with the skeletal model, wherein the analyzing the object comprises: extracting the object from the first image; computing an object descriptor; and comparing the computed object descriptor to a set of stored object properties.
Clause 12. The method of clause 11, wherein scoring the three-dimensional skeletal model further comprises calculating an effect of the object on the three-dimensional skeletal model.
Clause 13. The method of any preceding clause, wherein the scoring comprises performing a pose estimation of the skeletal model.
Clause 14. The method of any preceding clause, wherein the scoring comprises using a lookup database for known skeletal poses.
Clause 15. The method of any preceding clause, wherein the first image is a composite from a virtual reality image and a real-life image of an actor experiencing the virtual reality.
Clause 16. The method of clause 15, wherein: the actor interacts with an object; and the object is a virtual object.
Clause 17. The method of any preceding clause, further comprising: calculating a second three- dimensional skeletal model from a second image; scoring the second three-dimensional skeletal model; and storing the second score with the skeletal identifier.
Clause 18. An apparatus for analyzing ergonomics, the apparatus comprising: a memory; a processing circuitry coupled to the memory, wherein the processing circuitry is operable to: calculate a three-dimensional skeletal model from a first image; score the three-dimensional skeletal model; and store the score with a skeletal identifier.
Clause 19. The apparatus of clause 18, wherein the processing circuitry is further operable to: extract a two-dimensional skeletal structure from the first image; compute a skeletal descriptor from the skeletal structure; and compare the computed skeletal descriptor to a set of stored skeletal descriptors for assigning the skeletal identifier with the computed skeletal descriptor.
Clause 19A. The apparatus of clause 18 wherein the processing circuitry is further operable to: carry out the method of any of clauses 2 to 12.
Clause 20. A computer-readable storage medium for analyzing ergonomics, the computer-readable storage medium which may be non-transitory, and having computer-readable program code portions stored therein that in response to execution by a processor, cause an apparatus to at least: calculate a three-dimensional skeletal model from a first image; score the three-dimensional skeletal model; and store the score with a skeletal identifier.
Clause 21. A computer-readable storage medium for analyzing ergonomics, the computer-readable storage medium which may be non-transitory, and having computer-readable program code portions stored therein that in response to execution by a processor, cause an apparatus to at least: carry out the method of any of clauses 2 to 12.

## Claims

1. A method (800) of analyzing ergonomics, the method comprising:
calculating (810) a three-dimensional skeletal model (110a);
scoring (820) the three-dimensional skeletal model (110a); and
storing (830) the score with the skeletal identifier.

2. The method of claim 1, further comprising:
extracting (840) a first two-dimensional skeletal structure (104a) from a first image (102a);
computing (850) a skeletal descriptor (106a) from the first skeletal structure (104a);
comparing (860) the computed skeletal descriptor (106a) to a set of stored skeletal descriptors (108) for assigning a skeletal identifier with the computed skeletal descriptor (106);

3. The method of claim 2, wherein comparing the computed skeletal descriptor (106a) comprises:
comparing a vector element in the computed skeletal descriptor to a vector element in the stored skeletal descriptor set;
taking the mean value of the squared difference;
comparing the mean value to a threshold; and
assigning the computed skeletal descriptor (106) to the skeletal identifier when the mean value is less than the threshold.

4. The method of claims 2 or 3, further comprising:
adding the computed skeletal descriptor (106a) to the stored skeletal descriptor set (108) when the mean value is less than the threshold.

5. The method of any of claims 2 to 4, further comprising generating a new skeletal identifier and assigning the computed skeletal descriptor (106a) to the new skeletal identifier when the mean value is greater than the threshold.

6. The method of any of claims 2 to 5, further comprising determining an action based off the data stored with the skeletal identifier.

7. The method of claim 6, further comprising estimating a risk factor based at least in part on the determined action.

8. The method of any of claims 2 to 7, further comprising extracting more than one two-dimensional skeletal structure (510, 512) from the first image (506).

9. The method of any preceding claim, further comprising analyzing an object (204) associated with the skeletal structure (206), wherein the analyzing the object (204) comprises:
extracting the object (204) from the first image (202);
computing an object descriptor (208); and
comparing the computed object descriptor (208) to a set of stored object properties (210).

10. The method of any preceding claim, wherein scoring the three-dimensional skeletal model further comprises calculating the effect of the object on the three-dimensional skeletal model.

11. The method of any preceding claim, wherein the scoring comprises performing a pose estimation of the skeletal model.

12. The method of any preceding claim, further comprising:
calculating a second three-dimensional skeletal model (110b) from a second image (102a);
scoring the second three-dimensional skeletal model (110b); and
storing the second score with the skeletal identifier.

13. An apparatus (900) for analyzing ergonomics, the apparatus comprising:
a memory (960);
a processing circuitry (950) coupled to the memory (960), wherein the processing circuitry is operable to:
calculate a three-dimensional skeletal model (110a) from a first image (102a);
score the three-dimensional skeletal model (110a); and
store the score with the skeletal identifier.

14. The apparatus of claim 13, wherein the processing circuitry is further operable to:
extract a two-dimensional skeletal structure (104a) from the first image (102a);
compute a skeletal descriptor (106a) from the skeletal structure (104a); and
compare the computed skeletal descriptor (106a) to a set of stored skeletal descriptors (108) for assigning a skeletal identifier with the computed skeletal descriptor (106a).

15. A computer-readable storage medium (960) for analyzing ergonomics, the computer-readable storage medium (960) having computer-readable program code portions (970) stored therein that in response to execution by a processor, cause an apparatus (900) to at least:
calculate a three-dimensional skeletal model (110a) from a first image (102a);
score the three-dimensional skeletal model (110a); and
store the score with the skeletal identifier.
